(19) Europäisches Patentamt
European Patent Office
Office européen des brevets

(11) **EP 4 397 704 B1**

(12) **EUROPEAN PATENT SPECIFICATION**

(45) Date of publication and mention of the grant of the patent:
**05.03.2025 Bulletin 2025/10**

(21) Application number: **23150726.0**

(22) Date of filing: **09.01.2023**

(51) International Patent Classification (IPC):
***C08K 5/053*** *(2006.01)* ***C08K 5/526*** *(2006.01)*
***C08K 5/00*** *(2006.01)*

(52) Cooperative Patent Classification (CPC):
(C-Sets available)
**C08K 5/053; C08K 5/526;** C08K 5/005 (Cont.)

(54) **POLYMER COMPOSITION COMPRISING POLYETHYLENE WITH INCREASED STABILITY**

POLYMERZUSAMMENSETZUNG MIT POLYETHYLEN MIT ERHÖHTER STABILITÄT

COMPOSITION POLYMÈRE COMPRENANT DU POLYÉTHYLÈNE À STABILITÉ ACCRUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**10.07.2024 Bulletin 2024/28**

(73) Proprietor: **SABIC Global Technologies B.V.**
**4612 PX Bergen op Zoom (NL)**

(72) Inventors:
- **BHAUMIK, Kankan**
  **6160 GA Geleen (NL)**
- **WILSENS, Carolus**
  **6160 GA Geleen (NL)**
- **AT, Kavya**
  **6160 GA Geleen (NL)**
- **GOPALAKRISHNAN, Sadasivam**
  **6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
**US-A1- 2009 326 112 US-B2- 9 963 561**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/053, C08L 23/06;**
**C08K 5/526, C08L 23/06**

## Description

The present invention relates to a polymer composition comprising a polyethylene having an increased stability, in particular an increased stability when subjected to multiple melt processing steps. The invention in particular relates to a polymer composition comprising recycled polyethylenes.

Whilst phosphite-type antioxidants may be suitable for providing a certain stabilising effect in polyethylene-based polymer formulations, a detrimental effect of the use of certain phosphite-containing compounds is the occurrence of certain degradation products. For particular applications, such as for example in food contact applications, the occurrence of certain byproducts that come to exist as result of the stabilising action, in which the antioxidant compounds may decompose, is not appropriate. In particular, the occurrence of 2,4-di-t-butyl phenol (CAS reg. nr. 96-76-4) is to be avoided, it being a controlled substance.

Accordingly, a need exists to obtain polyethylene-based formulations that are adequately stabilised to be used in desirable applications, including food contact applications, wherein formation or release of 2,4-di-t-butyl phenol is avoided.

In particular, such stabilisation solution may be appropriate for use in polymer formulations that contain recycled polymer, in particular recycled polyethylene, materials. As, in view of materials circularity, there is a growing demand for solutions to help avoiding disposal of polymer materials after their useful service life, such as in packaging applications after use of the therein contained product, stabilisation of such polymer materials becomes increasingly more stringent; after all, re-using of such polymer material via recycling processes means that the polymer materials is subjected to both additional shaping processes, which typically involve melt treatment steps, and to a prolonged service life. The polymer molecule needs to be able to withstand additional harsh exposure for a prolonged time, without inappropriately deteriorating. To be able to achieve that, the molecule may be provided help from stabilising compounds.

Accordingly, it is an object of the present invention to provide a polymer composition comprising ethylene-based polymer material, that is sufficiently stable to use also in recycling applications, wherein undesirable formation of 2,4-di-t-butyl phenol is prevented.

This is now achieved by a polymer composition comprising or consisting of:

a) a composition comprising at least one ethylene-based polymer;
b) an additive composition comprising a compound of formula I:

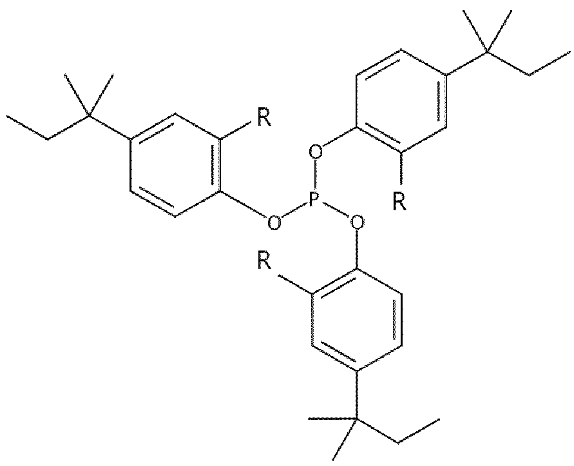

(I)

wherein each R is individually selected from 1,1-dimethylpropyl or hydrogen; and
c) 2,2-bis(hydroxymethyl)-1,3-propanediol.

Such polymer composition is appropriately stable, and the generation of 2,4-di-t-butyl phenol due to decomposition of stabiliser compounds is prevented.

In the context of the present invention, the stability of the polymer composition may be understood as reflected by its vinyl index. The vinyl index indicates the quantity of vinyl unsaturations in the polymer material. The lower the quantity of unsaturations, the more stable the material will perform, and the less the material is prone to degradation. The vinyl index may be calculated from the absorbance spectrum as obtained via Fourier Transform Infrared (FTIR) analysis performed in transmission mode. To obtain the value for the vinyl index on the basis of an FTIR spectrum, the below equation is to be applied:

$$VI = \frac{A_{908} - A_{933}}{A_{1897} - A_{1986}}$$

wherein $A_{908}$ is the absorbance at 908 $cm^{-1}$, $A_{933}$ is the absorbance at 933 $cm^{-1}$, $A_{1897}$ is the absorbance at 1897 $cm^{-1}$, and $A_{1986}$ is the absorbance at 1986 $cm^{-1}$ of a sample of the material composition.

The FTIR spectrum of the material to be tested may for example be tested according to the method of ASTM D5576-00 (2006).

Preferably, the ethylene-based polymer has a density of ≥ 940 and ≤ 975 kg/$m^3$, preferably of ≥ 950 and ≤ 970 kg/$m^3$, more preferably of ≥ 950 and ≤ 965 kg/$m^3$, as determined in accordance with ISO 1183-1 (2019).

The ethylene-based polymer may for example have a melt mass-flow rate (MFR2) of ≥ 0.1 and ≤ 5.0 g/10 min, preferably of ≥ 0.1 and ≤ 2.0 g/10 min, more preferably of ≥ 0.1 and ≤ 1.0 g/10 min, as determined in accordance with ISO 1133-1 (2011), at 190°C at a load of 2.16 kg.

The ethylene-based polymer may for example have a melt mass-flow rate (MFR5) of ≥ 1.0 and ≤ 10.0 g/10 min, preferably of ≥ 1.0 and ≤ 7.5 g/10 min, more preferably of ≥ 1.5 and ≤ 5.0 g/10 min, as determined in accordance with ISO 1133-1 (2011), at 190°C at a load of 5 kg.

The ethylene-based polymer may for example have a melt mass-flow rate (MFR21) of ≥ 10 and ≤ 100 g/10 min, preferably of ≥ 20 and ≤ 75 g/10 min, more preferably of ≥ 25 and ≤ 60 g/10 min, as determined in accordance with ISO 1133-1 (2011), at 190°C at a load of 21.6 kg.

For example, the ethylene-based polymer may be an ethylene homopolymer or an ethylene copolymer comprising ≤ 10.0 wt%, preferably ≤ 5.0 wt%, of moieties derived from a comonomer selected from 1-butene, 1-hexene and 1-octene.

In the polymer composition according to the invention, the composition a) preferably comprises a recycled polyethylene formulation. Particularly preferably, the composition a) comprises ≥ 20.0 wt%, more preferably ≥ 40.0 wt%, of a recycled polyethylene formulation, with regard to the total weight of the composition a).

The recycled polyethylene formulation may for example be a post-consumer recycled polyethylene formulation. The recycled polyethylene formulation may for example have a density of ≥ 940 and ≤ 975 kg/$m^3$, preferably of ≥ 950 and ≤ 970 kg/$m^3$, more preferably of ≥ 950 and ≤ 965 kg/$m^3$, as determined in accordance with ISO 1183-1 (2019). The recycled polyethylene formulation may for example have a melt mass-flow rate (MFR2) of ≥ 0.1 and ≤ 5.0 g/10 min, preferably of ≥ 0.1 and ≤ 2.0 g/10 min, more preferably of ≥ 0.1 and ≤ 1.0 g/10 min, as determined in accordance with ISO 1133-1 (2011), at 190°C at a load of 2.16 kg.

The recycled polyethylene formulation preferably comprises ≥ 90.0 wt% of ethylene-based polymers, more preferably ≥ 95.0 wt%, with regard to the total weight of the recycled polyethylene formulation. The recycled polyethylene formulation preferably comprises ≤ 10.0 wt% of propylene-based polymers, more preferably ≤ 5.0 wt%, with regard to the total weight of the recycled polyethylene formulation.

In a particular embodiment, the polymer composition may for example comprise ≥ 95.0 wt% of the composition a), with regard to the total weight of the polymer composition, preferably ≥ 98.0 wt%.

It is preferred that the polymer composition comprises ≥ 100 and ≤ 5000 ppm by weight of the additive composition b), with regard to the total weight of the polymer composition, more preferably ≥ 200 and ≤ 2000 ppm, even more preferably ≥ 500 and ≤ 1500 ppm.

The polymer composition may for example comprise ≥ 100 and ≤ 5000 ppm by weight of the 2,2-bis(hydroxymethyl)-1,3-propanediol, with regard to the total weight of the polymer composition, more preferably ≥ 200 and ≤ 2000 ppm, even more preferably ≥ 500 and ≤ 1500 ppm.

For example, the additive composition b) may comprise:

i. tris[2,4-bis(1,1-dimethylpropyl)phenyl] phosphite (CAS reg. nr. 1065-97-0); and/or
ii. bis[2,4-bis-(1,1-dimethylpropyl)phenyl] [4-(1,1-dimethylpropyl)phenyl] phosphite (CAS reg. nr. 1000027-06-4); and/or
iii. bis[4-(1,1-dimethylpropyl)phenyl] [2,4-bis-(1,1-dimethylpropyl)phenyl] phosphite (CAS reg. nr. 1000027-04-2).

It is preferred that the additive composition b) comprises:

i. tris[2,4-bis(1,1-dimethylpropyl)phenyl] phosphite;
ii. bis[2,4-bis-(1,1-dimethylpropyl)phenyl] [4-(1,1-dimethylpropyl)phenyl] phosphite; and
iii. bis[4-(1,1-dimethylpropyl)phenyl] [2,4-bis-(1,1-dimethylpropyl)phenyl] phosphite.

In a particular embodiment, the additive composition b) may for example comprise ≥ 90.0 wt% of the sum of i., ii, and iii, preferably ≥ 95.0 wt%, more preferably ≥ 98.0 wt%, with regard to the total weight of the additive composition.

Preferably, the additive composition b) does not contain any phosphite compounds other than i., ii. and iii. In a particularly preferred embodiment, the polymer composition does not contain any phosphite compounds other than i., ii. and iii.

The additive composition b) may further comprise tris(2-propanol)amine, preferably wherein the additive composition b) comprises ≥ 0 and ≤ 10.0 wt%, more preferably ≥ 0 and ≤ 5.0 wt%, even more preferably ≥ 0 and ≤ 2.0 wt%, of tris(2-propanol)amine, with regard to the total weight of the additive composition b).

In an embodiment, the invention also relates to the use of a formulation comprising 2,2-bis(hydroxymethyl)-1,3-propanediol and an additive composition comprising a compound of formula I:

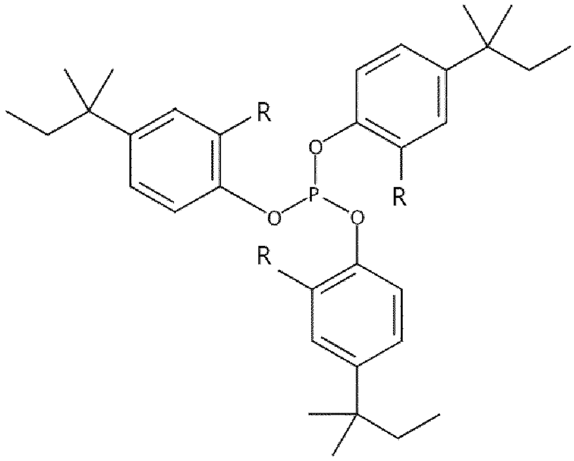

(I)

wherein each R is individually selected from 1,1-dimethylpropyl or hydrogen;
to reduce the quantity of vinyl unsaturations in a polymer composition comprising ethylene-based polymers, preferably wherein the polymer composition comprises a recycled polyethylene formulation.

The invention also relates to an article comprising the polymer composition according to the invention.

The invention will now be illustrated by the following non-limiting examples.

A number of polymer compositions were subjected to melt extrusion using a ZSK25 twinscrew melt extruder, having a screw diameter of 25 mm, and an L/D ratio of 40. The extruder was operated at 250 rpm, using the below setpoint temperature profile for each of the zone L1-L10 of the extruder, wherein L1 is the feed zone and L10 is the die zone. Temperatures are indicated in °C.

| L1 | L2 | L3 | L4 | L5 | L6 | L7 | L8 | L9 | L10 |
|---|---|---|---|---|---|---|---|---|---|
| 160 | 210 | 230 | 240 | 240 | 240 | 250 | 250 | 250 | 250 |

The feed rate of material to the extruder was 8.3 kg/h.

Using the above extrusion conditions, extrusion experiments were conducted of material compositions wherein the below-listed materials were used.

| | |
|---|---|
| PE1 | An ethylene-based polymer, SABIC B6246LS, obtainable from SABIC, having a density of 962 $kg/m^3$ and an MFR2 of 0.50. |
| PCR | A post-consumer recycled polyethylene formulation having a density of 957 $kg/m^3$, comprising 0.3 wt% of polypropylene. |
| AO1 | Weston 705, a phosphite type antioxidant obtainable from SI Group, CAS reg nr. 1373229-80-1, comprising tris[2,4-bis(1,1-dimethylpropyl)phenyl] phosphite, bis[2,4-bis-(1,1-dimethylpropyl)phenyl] [4-(1,1-dimethylpropyl)phenyl] phosphite, and bis[4-(1,1-dimethylpropyl)phenyl] [2,4-bis-(1,1-dimethylpropyl)phenyl] phosphite. |

(continued)

| | |
|---|---|
| AO2 | Weston 705T, a phosphite type antioxidant obtainable from SI Group, CAS reg nr. 2762929-16-6, comprising tris[2,4-bis(1,1-dimethylpropyl)phenyl] phosphite, bis[2,4-bis-(1,1-dimethylpropyl)phenyl] [4-(1,1-dimethylpropyl)phenyl] phosphite, and bis[4-(1,1-dimethylpropyl)phenyl] [2,4-bis-(1,1-dimethylpropyl)phenyl] phosphite, and further comprising tris(2-propanol)amine. |
| AO3 | Irgafos 168, (2,4-bis(t-butyl))-1,1',1"-phosphite phenol, CAS reg. nr. 31570-04-4 |
| BHP | 2,2-bis(hydroxymethyl)-1,3-propanediol, CAS reg. nr. 115-77-5 |
| CaSt | Calcium stearate, CAS reg. nr. 1592-23-0 |
| 1010 | Irganox 1010, Benzenepropanoic acid, 3,5-bis(1,1-dimethylethyl)-4-hydroxy-, 1, 1'-[2,2-bis[[3-[3,5-bis(1,1-dimethylethyl)-4-hydroxyphenyl]-1-oxopropoxy]methyl]-1,3-propanediyl] ester, CAS reg. nr. 6683-19-8 |
| MD1024 | Irganox MD 1024, Benzenepropanoic acid, 3,5-bis(1,1-dimethylethyl)-4-hydroxy-, 2-[3-[3,5-bis(1,1-dimethylethyl)-4-hydroxyphenyl]-1-oxopropyl]hydrazide, CAS reg. nr. 32687-78-8 |

Using the above materials, the following compositions were used in the examples demonstrating the invention.

| Example | 1 | 2 | 3 | 4 | 5 | 6 |
|---|---|---|---|---|---|---|
| PE1 | 99.7 wt% | 99.7 wt% | 99.7 wt% | 99.6 wt% | 99.6 wt% | 99.6 wt% |
| PCR | | | | | | |
| AO1 | | 921 ppm | | | 921 ppm | |
| AO2 | | | 939 ppm | | | 939 ppm |
| AO3 | 1000 ppm | | | 1000 ppm | | |
| BHP | | | | 1000 ppm | 1000 ppm | 1000 ppm |
| CaSt | 1000 ppm | 1000 ppm | 1000 ppm | 1000 ppm | 1000 ppm | 1000 ppm |
| 1010 | 500 ppm | 500 ppm | 500 ppm | 500 ppm | 500 ppm | 500 ppm |
| MD1024 | 200 ppm | 200 ppm | 200 ppm | 200 ppm | 200 ppm | 200 ppm |

| Example | 7 | 8 | 9 | 10 | 11 | 12 |
|---|---|---|---|---|---|---|
| PE1 | 49.7 wt% | 49.7 wt% | 49.7 wt% | 49.6 wt% | 49.6 wt% | 49.6 wt% |
| PCR | 50.0 wt% | 50.0 wt% | 50.0 wt% | 50.0 wt% | 50.0 wt% | 50.0 wt% |
| AO1 | | 817 ppm | | | 817 ppm | |
| AO2 | | | 833 ppm | | | 833 ppm |
| AO3 | 887 ppm | | | 887 ppm | | |
| BHP | | | | 1000 ppm | 1000 ppm | 1000 ppm |
| CaSt | 967 ppm | 967 ppm | 967 ppm | 967 ppm | 967 ppm | 967 ppm |
| 1010 | 430 ppm | 430 ppm | 430 ppm | 430 ppm | 430 ppm | 430 ppm |
| MD1024 | 187 ppm | 187 ppm | 187 ppm | 187 ppm | 187 ppm | 187 ppm |

To test the stabilisation properties, each of the formulations 1 through 12 was subjected to extrusion according to the conditions as set out above for 5 cycles, to establish the stability of the formulations when exposed to multiple occasions of melt processing. By so, it was evaluated whether the formulations were of appropriate quality to be used in recycling applications.

In the table below, results of testing of the vinyl index (VI) of the example formulations are presented.

| VI | 1 | 2 | 3 | 4 | 5 | 6 |
|---|---|---|---|---|---|---|
| After 1st cycle | 1.93 | 1.79 | 1.72 | 1.65 | 1.56 | 1.52 |
| After 3rd cycle | 1.83 | 1.81 | 1.71 | 1.58 | 1.51 | 1.56 |
| After 5th cycle | 1.87 | 1.79 | 1.74 | 1.55 | 1.51 | 1.51 |

| VI | 7 | 8 | 9 | 10 | 11 | 12 |
|---|---|---|---|---|---|---|
| After 1st cycle | 1.91 | 1.80 | 1.73 | 1.56 | 1.50 | 1.49 |
| After 3rd cycle | 1.81 | 1.82 | 1.80 | 1.58 | 1.45 | 1.52 |
| After 5th cycle | 1.81 | 1.84 | 1.79 | 1.56 | 1.52 | 1.51 |

The above results demonstrate that the polymer compositions allow for a reduction of the vinyl index, and further ensure the retention of that reduction after multiple iterations of extrusion.

## Claims

**1.** Polymer composition comprising or consisting of:

a) a composition comprising at least one ethylene-based polymer;
b) an additive composition comprising a compound of formula I:

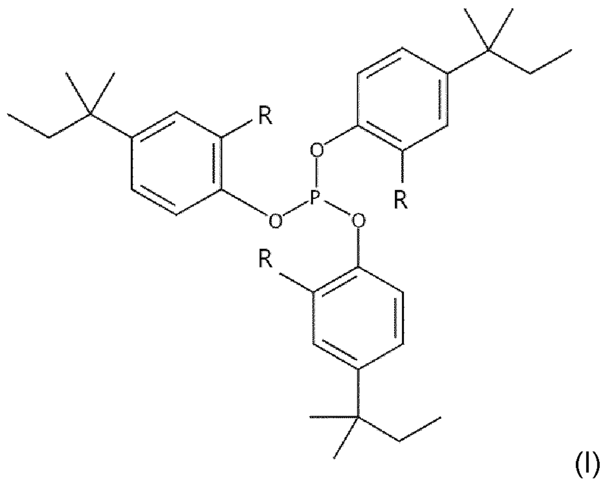

(I)

wherein each R is individually selected from 1,1-dimethylpropyl or hydrogen; and
c) 2,2-bis(hydroxymethyl)-1,3-propanediol.

**2.** Polymer composition according to claim 1, wherein the ethylene-based polymer has:

• a density of ≥ 940 and ≤ 975 kg/m$^3$, preferably of ≥ 950 and ≤ 970 kg/m$^3$, more preferably of ≥ 950 and ≤ 965 kg/m$^3$, as determined in accordance with ISO 1183-1 (2019); and
• a melt mass-flow rate (MFR2) of ≥ 0.1 and ≤ 5.0 g/10 min, preferably of ≥ 0.1 and ≤ 2.0 g/10 min, more preferably of 0.1 and ≤ 1.0 g/10 min, as determined in accordance with ISO 1133-1 (2011), at 190°C at a load of 2.16 kg.

**3.** Polymer composition according to any one of claims 1-2, wherein the ethylene-based polymer has:

• a melt mass-flow rate (MFR5) of ≥ 1.0 and ≤ 10.0 g/10 min, preferably of ≥ 1.0 and ≤ 7.5 g/10 min, more preferably of ≥ 1.5 and ≤ 5.0 g/10 min, as determined in accordance with ISO 1133-1 (2011), at 190°C at a load of 5 kg; and/or
• a melt mass-flow rate (MFR21) of ≥ 10 and ≤ 100 g/10 min, preferably of ≥ 20 and ≤ 75 g/10 min, more preferably of ≥ 25 and ≤ 60 g/10 min, as determined in accordance with ISO 1133-1 (2011), at 190°C at a load of 21.6 kg.

4. Polymer composition according to any one of claims 1-3, wherein the ethylene-based polymer is an ethylene homopolymer or an ethylene copolymer comprising ≤ 10.0 wt%, preferably ≤ 5.0 wt%, of moieties derived from a comonomer selected from 1-butene, 1-hexene and 1-octene.

5. Polymer composition according to any one of claims 1-4, wherein the composition a) comprises a recycled polyethylene formulation, preferably wherein the composition a) comprises ≥ 20.0 wt%, more preferably ≥ 40.0 wt%, of a recycled polyethylene formulation, with regard to the total weight of the composition a).

6. Polymer composition according to claim 5, wherein the recycled polyethylene formulation is a post-consumer recycled polyethylene formulation, preferably having:

- a density of ≥ 940 and ≤ 975 kg/$m^3$, preferably of ≥ 950 and ≤ 970 kg/$m^3$, more preferably of ≥ 950 and ≤ 965 kg/$m^3$, as determined in accordance with ISO 1183-1 (2019);
- a melt mass-flow rate (MFR2) of ≥ 0.1 and ≤ 5.0 g/10 min, preferably of ≥ 0.1 and ≤ 2.0 g/10 min, more preferably of 0.1 and ≤ 1.0 g/10 min, as determined in accordance with ISO 1133-1 (2011), at 190°C at a load of 2.16 kg.

7. Polymer composition according to any one of claims 5-6, wherein

the recycled polyethylene formulation comprises ≥ 90.0 wt% of ethylene-based polymers, preferably ≥ 95.0 wt%, with regard to the total weight of the recycled polyethylene formulation; and/or
wherein the recycled polyethylene formulation comprises ≤ 10.0 wt% of propylene-based polymers, preferably ≤ 5.0 wt%, with regard to the total weight of the recycled polyethylene formulation.

8. Polymer composition according to any one of claims 1-7, wherein the polymer composition comprises ≥ 95.0 wt% of the composition a), with regard to the total weight of the polymer composition, preferably ≥ 98.0 wt%.

9. Polymer composition according to any of claims 1-8, wherein the polymer composition comprises ≥ 100 and ≤ 5000 ppm by weight of the additive composition b), with regard to the total weight of the polymer composition, preferably ≥ 200 and ≤ 2000 ppm, more preferably ≥ 500 and ≤ 1500 ppm.

10. Polymer composition according to any one of claims 1-9, wherein the polymer composition comprises ≥ 100 and ≤ 5000 ppm by weight of the 2,2-bis(hydroxymethyl)-1,3-propanediol, with regard to the total weight of the polymer composition, preferably ≥ 200 and ≤ 2000 ppm, more preferably ≥ 500 and ≤ 1500 ppm.

11. Polymer composition according to any one of claims 1-10, wherein the additive composition b) comprises:

i. tris[2,4-bis(1,1-dimethylpropyl)phenyl] phosphite;
ii. bis[2,4-bis-(1,1-dimethylpropyl)phenyl] [4-(1,1-dimethylpropyl)phenyl] phosphite; and
iii. bis[4-(1,1-dimethylpropyl)phenyl] [2,4-bis-(1,1-dimethylpropyl)phenyl] phosphite.

12. Polymer composition according to claim 11, wherein the additive composition b) comprises ≥ 90.0 wt% of the sum of i., ii, and iii, preferably ≥ 95.0 wt%, more preferably ≥ 98.0 wt%, with regard to the total weight of the additive composition.

13. Polymer composition according to any one of claims 11-12, wherein the additive composition b) does not contain any phosphite compounds other than i., ii. and iii.

14. Polymer composition according to any one of claims 1-13, wherein the additive composition b) comprises tris(2-propanol)amine, preferably wherein the additive composition b) comprises ≥ 0 and ≤ 10.0 wt%, more preferably ≥ 0 and ≤ 5.0 wt%, even more preferably ≥ 0 and ≤ 2.0 wt%, of tris(2-propanol)amine, with regard to the total weight of the additive composition b).

15. Use of a formulation comprising 2,2-bis(hydroxymethyl)-1,3-propanediol and an additive composition comprising a compound of formula I:

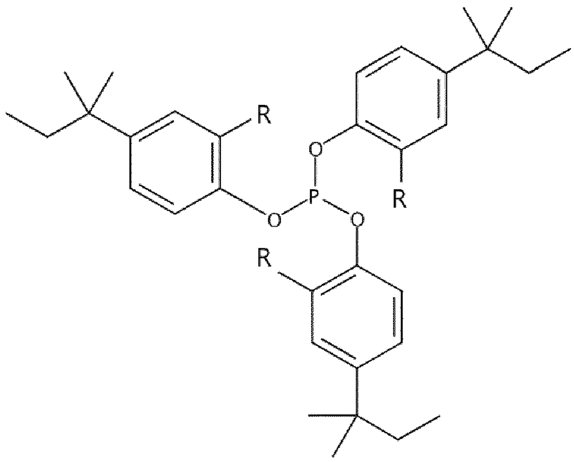

(I)

wherein each R is individually selected from 1,1-dimethylpropyl or hydrogen;
to reduce the quantity of vinyl unsaturations in a polymer composition comprising ethylene-based polymers, preferably wherein the polymer composition comprises a recycled polyethylene formulation.

## Patentansprüche

1. Polymerzusammensetzung, die Folgendes umfasst oder aus Folgendem besteht:

   a) eine(r) Zusammensetzung, umfassend mindestens ein Polymer auf Ethylenbasis;
   b) eine(r) Additivzusammensetzung, umfassend eine Zusammensetzung der Formel I:

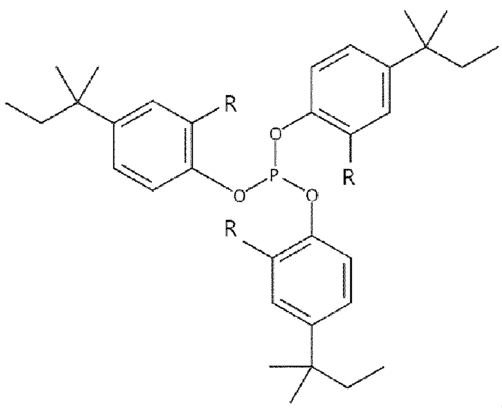

(I)

   wobei jedes R individuell aus 1,1-Dimethylpropyl oder Wasserstoff ausgewählt ist; und
   c) 2,2-Bis(hydroxymethyl)-1,3-propandiol.

2. Polymerzusammensetzung nach Anspruch 1, wobei das Polymer auf Ethylenbasis Folgendes aufweist:

   - eine Dichte von ≥ 940 und ≤ 975 kg/m$^3$, vorzugsweise von ≥ 950 und ≤ 970 kg/m$^3$, bevorzugter von ≥ 950 und ≤ 965 kg/m$^3$, wie gemäß ISO 1183-1 (2019) bestimmt; und
   - eine Schmelzmasse-Flussrate (MFR2) von ≥ 0,1 und ≤ 5,0 g/10 min, vorzugsweise von ≥ 0,1 und ≤ 2,0 g/10 min, bevorzugter von ≥ 0,1 und ≤ 1,0 g/10 min, wie gemäß ISO 1133-1 (2011) bestimmt, bei 190 °C mit einer Last von 2,16 kg.

3. Polymerzusammensetzung nach einem der Ansprüche 1-2, wobei das Polymer auf Ethylenbasis Folgendes aufweist:

   - eine Schmelzmassenflussrate (MFR5) von ≥ 1,0 und ≤ 10,0 g/10 min, vorzugsweise von ≥ 1,0 und ≤ 7,5 g/10 min,

bevorzugter von ≥ 1,5 und ≤ 5,0 g/10 min, wie gemäß ISO 1133-1 (2011) bestimmt, bei 190 °C mit einer Last von 5 kg; und/oder
- eine Schmelzmassenflussrate (MFR21) von ≥ 10 und ≤ 100 g/10 min, vorzugsweise von ≥ 20 und ≤ 75 g/10 min, bevorzugter von ≥ 25 und ≤ 60 g/10 min, wie gemäß ISO 1133-1 (2011) bestimmt, bei 190 °C mit einer Last von 21,6 kg.

**4.** Polymerzusammensetzung nach einem der Ansprüche 1-3, wobei das Polymer auf Ethylenbasis ein Ethylenhomopolymer oder ein Ethylencopolymer ist, das ≤ 10,0 Gew.-%, vorzugsweise ≤ 5,0 Gew.-%, Einheiten umfasst, die von einem Comonomer abgeleitet sind, das aus 1-Buten, 1-Hexen und 1-Octen ausgewählt ist.

**5.** Polymerzusammensetzung nach einem der Ansprüche 1-4, wobei die Zusammensetzung a) eine recycelte Polyethylenformulierung umfasst, vorzugsweise wobei die Zusammensetzung a) ≥ 20,0 Gew.-%, bevorzugter ≥ 40,0 Gew.-% einer recycelten Polyethylenformulierung bezogen auf das Gesamtgewicht der Zusammensetzung a) umfasst.

**6.** Polymerzusammensetzung nach Anspruch 5, wobei die Formulierung von recyceltem Polyethylen eine Nach-Gebrauchs-recycelte Polyethylenformulierung ist, die vorzugsweise Folgendes aufweist:

- eine Dichte von ≥ 940 und ≤ 975 $kg/m^3$, vorzugsweise von ≥ 950 und ≤ 970 $kg/m^3$, bevorzugter von ≥ 950 und ≤ 965 $kg/m^3$, wie gemäß ISO 1183-1 (2019) bestimmt;
- eine Schmelzmasse-Flussrate (MFR2) von ≥ 0,1 und ≤ 5,0 g/10 min, vorzugsweise von ≥ 0,1 und ≤ 2,0 g/10 min, bevorzugter von ≥ 0,1 und ≤ 1,0 g/10 min, wie gemäß ISO 1133-1 (2011) bestimmt, bei 190 °C mit einer Last von 2,16 kg.

**7.** Polymerzusammensetzung nach einem der Ansprüche 5-6, wobei

die recycelte Polyethylenformulierung ≥ 90,0 Gew.-%, an Polymeren auf Ethylenbasis, vorzugsweise ≥ 95,0 Gew.-% bezogen auf das Gesamtgewicht der recycelten Polyethylenformulierung umfasst; und/oder
wobei die recycelte Polyethylenformulierung ≤ 10,0 Gew.-% an Polymeren auf Propylenbasis, vorzugsweise ≤ 5,0 Gew.-%, bezogen auf das Gesamtgewicht der recycelten Polyethylenformulierung umfasst.

**8.** Polymerzusammensetzung nach einem der Ansprüche 1-7, wobei die Polymerzusammensetzung ≥ 95,0 Gew.-% der Zusammensetzung a), vorzugsweise ≥ 98,0 Gew.-% bezogen auf das Gesamtgewicht der Polymerzusammensetzung umfasst.

**9.** Polymerzusammensetzung nach einem der Ansprüche 1-8, wobei die Polymerzusammensetzung ≥ 100 und ≤ 5000 ppm nach Gewicht der Additivzusammensetzung b), vorzugsweise ≥ 200 und ≤ 2000 ppm, noch bevorzugter ≥ 500 und ≤ 1500 ppm bezogen auf das Gesamtgewicht der Polymerzusammensetzung umfasst.

**10.** Polymerzusammensetzung nach einem der Ansprüche 1-9, wobei die Polymerzusammensetzung ≥ 100 und ≤ 5000 ppm, nach Gewicht des 2,2-Bis(hydroxymethyl)-1,3-propandiols, vorzugsweise ≥ 200 und ≤ 2000 ppm, noch bevorzugter >_ 500 und ≤ 1500 ppm bezogen auf das Gesamtgewicht des Polymerzusammensetzung umfasst.

**11.** Polymerzusammensetzung nach einem der Ansprüche 1-10, wobei die Additivzusammensetzung b) umfasst:

i. Tris[2,4-bis(1,1-dimethylpropyl)phenyl]phosphit;
ii. Bis[2,4-bis-(1,1-dimethylpropyl)phenyl] [4-(1,1-dimethylpropyl)phenyl]phosphit; und
iii. Bis[4-(1,1-dimethylpropyl)phenyl] [2,4-bis-(1,1-dimethylpropyl)phenyl]phosphit.

**12.** Polymerzusammensetzung nach Anspruch 11, wobei die Additivzusammensetzung b) ≥ 90,0 Gew.-% der Summe von i., ii. und iii., vorzugsweise ≥ 95,0 Gew.-%, noch bevorzugter ≥ 98,0 Gew.-%, bezogen auf das Gesamtgewicht von die Additivzusammensetzung umfasst.

**13.** Polymerzusammensetzung nach einem der Ansprüche 11-12, wobei die Additivzusammensetzung b) keine anderen Phosphitzusammensetzungen als i., ii. und iii. enthält.

**14.** Polymerzusammensetzung nach einem der Ansprüche 1-13, wobei die Additivzusammensetzung b)Tris(2-propanol) amin umfasst, wobei die Additivzusammensetzung b) vorzugsweise ≥ 0 und ≤ 10,0 Gew.-%, bevorzugter ≥ 0 und ≤ 5,0

Gew.-%, noch bevorzugter ≥ 0 und ≤ 2,0 Gew.-%, Tris(2-propanol)amin bezogen auf das Gesamtgewicht der Additivzusammensetzung b) umfasst.

**15.** Verwendung einer Formulierung, umfassend 2,2-Bis(hydroxymethyl)-1,3-propandiol und eine Additivzusammensetzung, umfassend eine Zusammensetzung der Formel I:

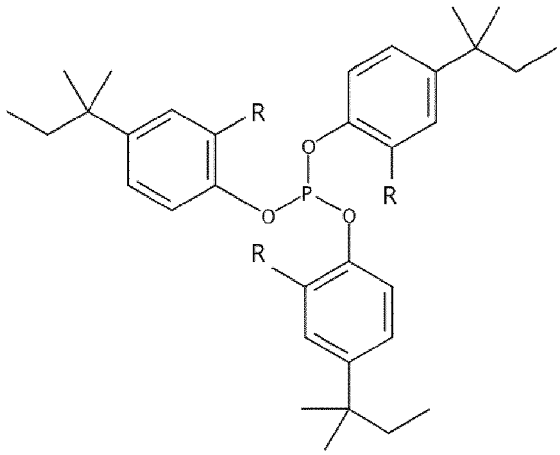

(I)

wobei jedes R individuell aus 1,1-Dimethylpropyl oder Wasserstoff ausgewählt ist;
um die Menge an Vinyl-Unsättigungen in einer Polymerzusammensetzung zu verringern, die Polymere auf Ethylenbasis umfasst, wobei vorzugsweise die Polymerzusammensetzung eine recycelte Polyethylenformulierung umfasst.

## Revendications

**1.** Composition polymère comprenant ou consistant en :

a) une composition comprenant au moins un polymère à base d'éthylène ;
b) une composition additive comprenant un composé de formule I :

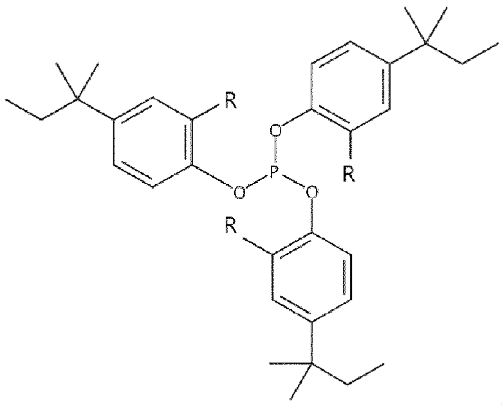

(I)

dans laquelle chaque R est sélectionné individuellement parmi le 1,1-diméthylpropyle ou l'hydrogène ; et
c) 2,2-bis(hydroxyméthyl)-1,3-propanediol.

**2.** Composition polymère selon la revendication 1, dans laquelle le polymère à base d'éthylène présente :

- une densité ≥ 940 et ≤ 975 kg/$m^3$, de préférence ≥ 950 et ≤ 970 kg/$m^3$, plus préférentiellement ≥ 950 et ≤ 965 kg/$m^3$, telle que déterminée conformément à la norme ISO 1183-1 (2019) ; et
- un indice de fluidité en masse (MFR2) ≥ 0,1 et ≤ 5,0 g/10 min, de préférence ≥ 0,1 et ≤ 2,0 g/10 min, plus

préférentiellement ≥ 0,1 et ≤ 1,0 g/10 min, tel que déterminé conformément à la norme ISO 1133-1 (2011), à 190 °C sous une charge de 2,16 kg.

**3.** Composition polymère selon l'une quelconque des revendications 1-2, dans laquelle le polymère à base d'éthylène présente :

- un indice de fluidité en masse (MFR5) ≥ 1,0 et ≤ 10,0 g/10 min, de préférence ≥ 1,0 et ≤ 7,5 g/10 min, plus préférentiellement ≥ 1,5 et ≤ 5,0 g/10 min, tel que déterminé conformément à la norme ISO 1133-1 (2011), à 190 °C sous une charge de 5 kg ; et/ou
- un indice de fluidité en masse (MFR21) ≥ 10 et ≤ 100 g/10 min, de préférence ≥ 20 et ≤ 75 g/10 min, plus préférentiellement ≥ 25 et ≤ 60 g/10 min, tel que déterminé conformément à la norme ISO 1133-1 (2011), à 190 °C sous une charge de 21,6 kg.

**4.** Composition polymère selon l'une quelconque des revendications 1-3, dans laquelle le polymère à base d'éthylène est un homopolymère d'éthylène ou un copolymère d'éthylène comprenant ≤ 10,0 % en poids, de préférence ≤ 5,0 % en poids, de fractions dérivées d'un comonomère sélectionné parmi le 1-butène, le 1-hexène et le 1-octène.

**5.** Composition polymère selon l'une quelconque des revendications 1-4, dans laquelle la composition a) comprend une formulation de polyéthylène recyclé, de préférence dans laquelle la composition a) comprend ≥ 20,0 % en poids, plus préférentiellement ≥ 40,0 % en poids, d'une formulation de polyéthylène recyclé, par rapport au poids total de la composition a).

**6.** Composition polymère selon la revendication 5, dans laquelle la formulation de polyéthylène recyclé est une formulation de polyéthylène recyclé post-consommation, présentant de préférence :

- une densité ≥ 940 et ≤ 975 kg/$m^3$, de préférence ≥ 950 et ≤ 970 kg/$m^3$, plus préférentiellement ≥ 950 et ≤ 965 kg/$m^3$, telle que déterminée conformément à la norme ISO 1183-1 (2019) ;
- un indice de fluidité en masse (MFR2) ≥ 0,1 et ≤ 5,0 g/10 min, de préférence ≥ 0,1 et ≤ 2,0 g/10 min, plus préférentiellement ≥ 0,1 et ≤ 1,0 g/10 min, tel que déterminé conformément à la norme ISO 1133-1 (2011), à 190 °C sous une charge de 2,16 kg.

**7.** Composition polymère selon l'une quelconque des revendications 5-6, dans laquelle

la formulation de polyéthylène recyclé comprend ≥ 90,0 % en poids de polymères à base d'éthylène, de préférence ≥ 95,0 % en poids, par rapport au poids total de la formulation de polyéthylène recyclé ; et/ou
dans laquelle la formulation de polyéthylène recyclé comprend ≤ 10,0 % en poids de polymères à base de propylène, de préférence ≤ 5,0 % en poids, par rapport au poids total de la formulation de polyéthylène recyclé.

**8.** Composition polymère selon l'une quelconque des revendications 1-7, dans laquelle la composition polymère comprend ≥ 95,0 % en poids de la composition a), par rapport au poids total de la composition polymère, de préférence ≥ 98,0 % en poids.

**9.** Composition polymère selon l'une quelconque des revendications 1-8, dans laquelle la composition polymère comprend ≥ 100 et ≤ 5 000 ppm en poids de la composition additive b), par rapport au poids total de la composition polymère, de préférence ≥ 200 et ≤ 2 000 ppm, plus préférentiellement ≥ 500 et ≤ 1 500 ppm.

**10.** Composition polymère selon l'une quelconque des revendications 1-9, dans laquelle la composition polymère comprend ≥ 100 et ≤ 5 000 ppm en poids du 2,2-bis(hydroxyméthyl)-1,3-propanediol, par rapport au poids total de la composition polymère, de préférence ≥ 200 et ≤ 2 000 ppm, plus préférentiellement ≥ 500 et ≤ 1 500 ppm.

**11.** Composition polymère selon l'une quelconque des revendications 1-10, dans laquelle la composition additive b) comprend :

i. tris[2,4-bis(1,1-diméthylpropyl)phényl] phosphite ;
ii. bis[2,4-bis-(1,1-diméthylpropyl)phényl] [4-(1,1-diméthylpropyl)phényl] phosphite ; et
iii. bis[4-(1,1-diméthylpropyl)phényl] [2,4-bis-(1,1-diméthylpropyl)phényl] phosphite.

**12.** Composition polymère selon la revendication 11, dans laquelle la composition additive b) comprend ≥ 90,0 % en poids

de la somme de i., ii. et iii., de préférence ≥ 95,0 % en poids, plus préférentiellement ≥ 98,0 % en poids, par rapport au poids total de la composition additive.

**13.** Composition polymère selon l'une quelconque des revendications 11-12, dans laquelle la composition additive b) ne contient aucun composé phosphite autre que i., ii. et iii.

**14.** Composition polymère selon l'une quelconque des revendications 1-13, dans laquelle la composition additive b) comprend de la tris(2-propanol)amine, de préférence dans laquelle la composition additive b) comprend ≥ 0 et ≤ 10,0 % en poids, plus préférentiellement ≥ 0 et ≤ 5,0 % en poids, encore plus préférentiellement ≥ 0 et ≤ 2,0 % en poids, de tris(2-propanol)amine, par rapport au poids total de la composition additive b).

**15.** Utilisation d'une formulation comprenant du 2,2-bis(hydroxyméthyl)-1,3-propanediol et une composition additive comprenant un composé de formule I :

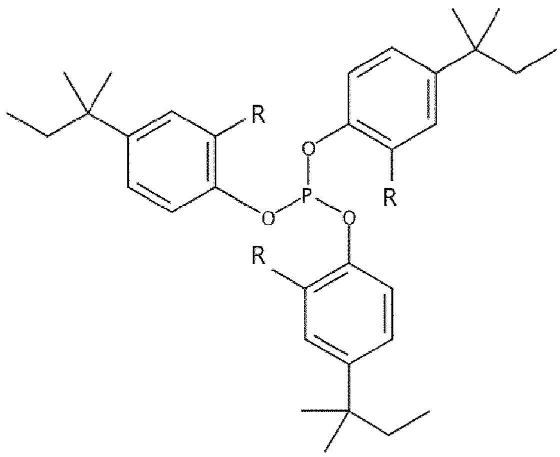

(I)

dans laquelle chaque R est sélectionné individuellement parmi le 1,1-diméthylpropyle ou l'hydrogène ;
pour réduire la quantité d'insaturations vinyliques dans une composition polymère comprenant des polymères à base d'éthylène, de préférence dans laquelle la composition polymère comprend une formulation de polyéthylène recyclé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 96-76-4
- *CHEMICAL ABSTRACTS*, 1065-97-0
- *CHEMICAL ABSTRACTS*, 1000027-06-4
- *CHEMICAL ABSTRACTS*, 1000027-04-2
- *CHEMICAL ABSTRACTS*, 1373229-80-1
- *CHEMICAL ABSTRACTS*, 2762929-16-6
- *CHEMICAL ABSTRACTS*, 31570-04-4
- *CHEMICAL ABSTRACTS*, 115-77-5
- *CHEMICAL ABSTRACTS*, 1592-23-0
- *CHEMICAL ABSTRACTS*, 6683-19-8
- *CHEMICAL ABSTRACTS*, 32687-78-8